# EUROPÄISCHE PATENTSCHRIFT

(11) **EP 1 926 633 B1**
(45) Veröffentlichungstag und Bekanntmachung des Hinweises auf die Patenterteilung: **16.09.2009**
(21) Anmeldenummer: 06764053.2
(22) Anmeldetag: 04.07.2006
(51) Int. Cl.: B60R 7/02

(54) **STAUFACH FÜR EIN KRAFTFAHRZEUG**
STORAGE COMPARTMENT FOR A MOTOR VEHICLE
COMPARTIMENT DE RANGEMENT POUR UN VEHICULE AUTOMOBILE

(30) Priorität: 12.09.2005 DE 102005043593
(43) Veröffentlichungstag der Anmeldung: 04.06.2008
(73) Patentinhaber: Faurecia Innenraum Systeme GmbH, 76767 Hagenbach (DE)
(72) Erfinder: MÜLLER, Ralf, 76726 Germersheim (DE)
(74) Vertreter: Richardt, Markus Albert
(86) Internationale Anmeldenummer: PCT/EP2006/063855
(87) Internationale Veröffentlichungsnummer: WO 2007/031351

(56) Entgegenhaltungen:
- DE-U1- 20 311 467
- US-A- 4 552 399

## Beschreibung

Die Erfindung betrifft ein Staufach für ein Kraftfahrzeug sowie ein Kraftfahrzeug-Innenverkleidungsteil, wie zum Beispiel eine Tür-Innenverkleidung, eine Mittelkonsole und eine Kofferraum-Innenverkleidung, und eine Kraftfahrzeugtür mit einem Staufach.

Ein Staufach für den Innenraum eines Kraftfahrzeugs muss neben dem Bedienkomfort auch eine hohe Funktionssicherheit gewährleisten. Bei einem Unfall oder Crash darf es nicht dazu kommen, dass sich das Staufach selbsttätig öffnet. In dem Staufach abgelegte Gegenstände könnten sonst mit erheblicher Beschleunigung aus dem Staufach geschleudert werden, wodurch es zu einer Gefährdung und gegebenenfalls Verletzung von im Innenraum des Kraftfahrzeugs befindlichen Personen kommen kann.

US 4 552 399 A zeigt ein Staufach gemäß den Oberbegriff des Anspruchs 1.

Aus der DE 20 2004 003 227 U1 ist eine Verschlusseinheit für die Abdeckung einer Öffnung im Inneren von Fahrzeugen bekannt. Die Verschlusseinheit hat ein Schließelement, das von zwei Seiten umkrallt wird. Durch eine in einen Rastbügel eingreifende Verriegelungsnase einer Wippe werden die Rastbügel der Verschlusseinheit in einer Schließendlage sicher verriegelt. Ohne Betätigung eines Öffnungsgriffs ist dadurch ein selbsttätiges Öffnen ausgeschlossen.

Aus der DE 100 27 020 B4 ist eine Mittelkonsole für Fahrzeuge mit einer Crash-Sperre bekannt. Die Crash-Sperre soll verhindern, dass die Schublade der Mittelkonsole aufgrund deren Trägheit bei einem Crash des Kraftfahrzeugs nach hinten aus der Mittelkonsole herausgeschleudert wird. Die Auslösung der Crash-Sperre erfolgt ausschließlich aufgrund der Trägheitskräfte der Bauteile. Die Auslösung der Crash-Sperre beginnt erst dann, wenn die Schublade herauszufahren beginnt.

Aus der DE 102 00 102 A1 ist eine Crash-aktive Verriegelung von kinematischen Komponenten in einem Fahrzeug-Innenraum bekannt. Die Verrieglung hat einen Antrieb für ein Verrieglungsglied, das von einem Beschleunigungssensor einer Airbag-Steuereinheit angesteuert wird.

Aus der DE 203 11 467 U1 ist ein weiteres Einbauteil als Innenausstattung von Kraftfahrzeugen mit einer Crash-Verriegelungseinheit bekannt.

Aus der DE 41 30 847 C2 ist eine Verschlußkappe zum Verschließen eines Ablagefachs im Innenraum eines Kraftfahrzeugs bekannt. Bei einer Beschleunigung von über 10g wird das Ablagefach automatisch arretiert.

Der Erfindung liegt dem gegenüber die Aufgabe zu Grunde ein verbessertes Staufach für ein Kraftfahrzeug zu schaffen, sowie ein Kraftfahrzeug-Innenverkleidungsteil, wie zum Beispiel eine Tür-Innenverkleidung, eine Mittelkonsole und eine Kofferraum-Innenverkleidung, und eine Kraftfahrzeugtür mit einem solchen Staufach.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Ansprüchen angegeben.

Durch die Erfindung wird ein Staufach für ein Kraftfahrzeug geschaffen, das einen Behälter mit einem an dem Behälter schwenkbar angeordneten Behälterdeckel aufweist. An dem Behälterdeckel ist ein Schwenkhebel angeordnet. Ein elastisches Element, d.h. eine Totpunktfeder, ist mit dessen ersten Ende mit dem Behälter und mit dessen zweiten Ende mit dem Schwenkhebel verbunden. Die Totpunktfeder übt dadurch eine Schließkraft bzw. ein Schließmoment auf den Behälterdeckel aus, solange eine Öffnungsstellung des Behälterdeckels einen Totpunkt nicht überschreitet. Statt einer Totpunktfeder kann auch ein elastisches Band oder dergleichen verwendet werden, um den Behälterdeckel im Normalbetrieb geschlossen zu halten. Die Schließkraft bzw. das Schließmoment kann dabei unmittelbar auf den Behälterdeckel oder mittelbar auf einen Verriegelungsmechanismus des Behälterdeckels ausgeübt werden, so dass dieser den Behälterdeckel geschlossen hält.

Die Erfindung ist besonders vorteilhaft, da das Verriegelungselement um das erste Ende des elastischen Elements, d.h. der Totpunktfeder, schwenkbar gelagert ist, wobei das erste Ende mit dem Behälter verbunden ist. Dies ermöglicht eine zugleich besonders kompakte und auch bei hohen Beschleunigungskräften sicher funktionsfähige Konstruktion.

Das Staufach hat ein Verriegelungselement, welches schwenkbar gelagert ist, so dass es aufgrund seiner Massenträgheit bei einem Aufprall des Kraftfahrzeugs in eine Verrieglungsposition zur Arretierung des Schwenkhebels gebracht wird.

Die vorliegende Erfindung ermöglicht also eine konstruktiv kompakte Ausgestaltung eines Staufachs mit einer Crash-Verrieglung. Dies wird dadurch ermöglicht, dass das Verriegelungselement in seiner Verrieglungsposition den im Normalbetrieb ohnehin benötigten Schwenkhebel arretiert.

Nach einer Ausführungsform der Erfindung ist das Verrieglungselement um das erste Ende der Totpunktfeder schwenkbar gelagert. Dies ermöglicht eine besonders kompakte konstruktive Ausgestaltung.

Nach einer Ausführungsform der Erfindung ist das Verriegelungselement klinkenförmig ausgebildet. Beispielsweise hat das Verrieglungselement an seinem der Schwenkachse abgewandten Ende eine hakenförmige Ausbildung, um in der Verrieglungsposition in eine entsprechende hakenförmige Ausbildung des Schwenkhebels eingreifen zu können. Die Verriegelungsposition des Verriegelungselements wird dabei durch die hakenförmige Ausbildung des Schwenkhebels und / oder durch ein oder mehrere Anschläge für das Verrieglungselement definiert.

Nach einer Ausführungsform der Erfindung ist an dem Behälter ein Lagerzapfen für das Verrieglungselement angeordnet. Dieser Lagerzapfen bildet die Schwenkachse für das Verrieglungselement. Der Lagerzapfen hat eine Ausnehmung zur Aufnahme des ersten Endes der Totpunktfeder, welches entlang der Schwenkachse in den Lagerzapfen hinein verläuft.

Nach einer weiteren Ausführungsform der Erfindung ist der Behälterdeckel nach oben zu öffnen. Beispielsweise ist der Behälter in eine Tür-Innenverkleidung integriert, so dass ein Staufach beispielsweise in der Fahrertür oder Beifahrertür geschaffen wird.

Nach einer Ausführungsform der Erfindung ist das Verriegelungselement mit einem elastischen Element verbunden. Das elastische Element dient dazu, das Verriegelungselement bei Normalbetrieb des Kraftfahrzeugs außerhalb der Verriegelungsposition zu halten, so dass beim Normalbetrieb des Kraftfahrzeugs der Behälterdeckel geöffnet werden kann, um Gegenstände in das Staufach zu legen oder aus diesem zu entnehmen. Bei einer Beschleunigung, die beim Normalbetrieb des Kraftfahrzeugs üblicherweise nicht vorkommt, wird das Verriegelungselement aufgrund dessen Massenträgheit entgegen der von dem elastischen Element ausgeübten Federkraft in die Verriegelungsposition bewegt.

Das elastische Element dient ferner als Klapperschutz, um das Verriegelungselement in seiner Normalposition zu halten, wenn das Kraftfahrzeug auf einer unebenen Straße oder durch Schlaglöcher fährt.

Nach einer Ausführungsform der Erfindung wirkt das elastische Element auf einen Schenkel des Verriegelungselements. Dadurch wird auf das Verriegelungselement ein Drehmoment ausgeübt. Um das Verriegelungselement in Bewegung zu setzen, ist eine auf das Verriegelungselement wirkende Beschleunigung erforderlich, die so groß ist, dass dieses Drehmoment überwunden wird.

Bei einer Ausführungsform der Erfindung handelt es sich bei dem elastischen Element um eine Druckfeder.

Nach einer weiteren Ausführungsform der Erfindung ist das aus der Totpunktfeder und dem Behälterdeckel gebildete Masse-Feder-System so ausgebildet, dass der Behälterdeckel bis zu einer ersten Beschleunigung geschlossen bleibt. Das aus dem Verriegelungselement und dem elastischen Element gebildete zweite Masse-Feder-System ist dagegen so ausgebildet, dass das Verriegelungselement bis zu einer zweiten Beschleunigung in seiner Normalposition bleibt, wobei die zweite Beschleunigung kleiner als die erste Beschleunigung ist.

Beim Auftreten einer großen Beschleunigung von z.B. 40 g, beispielsweise wenn das Kraftfahrzeug bei einem Überschlag mit dem Dach nach unten auf die Straße aufschlägt, ist dadurch sichergestellt, dass das Verriegelungselement bereits seine Verriegelungsposition erreicht hat, bevor sich der Behälterdeckel öffnen kann. Mit anderen Worten eilt also das aus dem Verriegelungselement und dem elastischen Element gebildete Masse-Feder-System dem aus der Totpunktfeder und dem Behälterdeckel gebildeten Masse-Feder-System vor. Dabei kann es je nach der Wahl der Geometrien und/oder der Massen und der Federsteifigkeiten zu einer geringen Öffnung des Behälterdeckels kommen, bei der aber noch keine Gegenstände aus dem Behälter herausfallen können. Beispielsweise ist die Verriegelungsposition durch entsprechende Anschläge fest vorgegeben. Alternativ ist es auch möglich, dass sich die Verriegelungsposition aus den Stellungen des Verriegelungselements und des Hebels des Behälterdeckels ergibt, wenn beide aufeinander treffen.

Nach einer Ausführungsform der Erfindung beträgt die erste Beschleunigung zwischen dem Drei- und Fünffachen der Erdbeschleunigung (g), insbesondere ca. 4,3 g, während die zweite Beschleunigung zwischen 1 g und 3 g, vorzugsweise ca. 2,3 g beträgt.

Nach einer Ausführungsform der Erfindung beträgt die Differenz zwischen den ersten und zweiten Beschleunigungen mindestens 1 g, vorzugsweise ca. 2,3 g.

In einem weiteren Aspekt betrifft die vorliegende Erfindung ein Kraftfahrzeug-Innenverkleidungsteil mit einem integrierten Stauraum, wie zum Beispiel einem Ablagefach, welches eine erfindungsgemäße Crash-Verriegelung aufweist. Bei dem Kraftfahrzeug-Innenverkleidungsteil kann es sich beispielsweise um eine Tür-Innenverkleidung, eine Mittelkonsole oder eine Kofferraum-Innenverkleidung handeln.

In einem weiteren Aspekt betrifft die Erfindung eine Kraftfahrzeug-Tür mit einem integrierten Staufach, welches eine erfindungsgemäße Crash-Verriegelung aufweist.

Im weiteren werden bevorzugte Ausführungsformen der Erfindung mit Bezugnahme auf die Zeichnungen näher erläutert. Es zeigen:
- Figur 1: eine perspektivische Darstellung einer Ausführungsform eines erfindungsgemäßen Staufachs, welches als Ablagefach in der Tür-Innenverkleidung der Fahrertür eines Kraftfahrzeugs ausgebildet ist,
- Figur 2: eine seitliche Ansicht eines vorderen Abschnitts des Ablagefachs,
- Figur 3: eine Frontalansicht des Ablagefachs der Figur 1,
- Figur 4: die Ansicht des Ablagefachs der Figur 3, wobei sich das Verriegelungselement in seiner Verriegelungsposition befindet,
- Figur 5: eine Detailansicht des Verriegelungselements und des Schwenkhebels der Ausführungsformen gemäß Figur 1 bis 4 in Normalposition,
- Figur 6: die Ansicht gemäß Figur 5 in Verriegelungsposition,
- Figur 7: eine alternative Ausführungsform des Verriegelungselements und des Schwenkhakens in Normalposition,
- Figur 8: die Ansicht der Figur 7 in Verriegelungsposition,
- Figur 9: eine weitere Ausführungsform des Verriegelungselements und des Schwenkhakens in Normalposition,
- Figur 10: die Ansicht der Figur 9 in Verriegelungsposition.

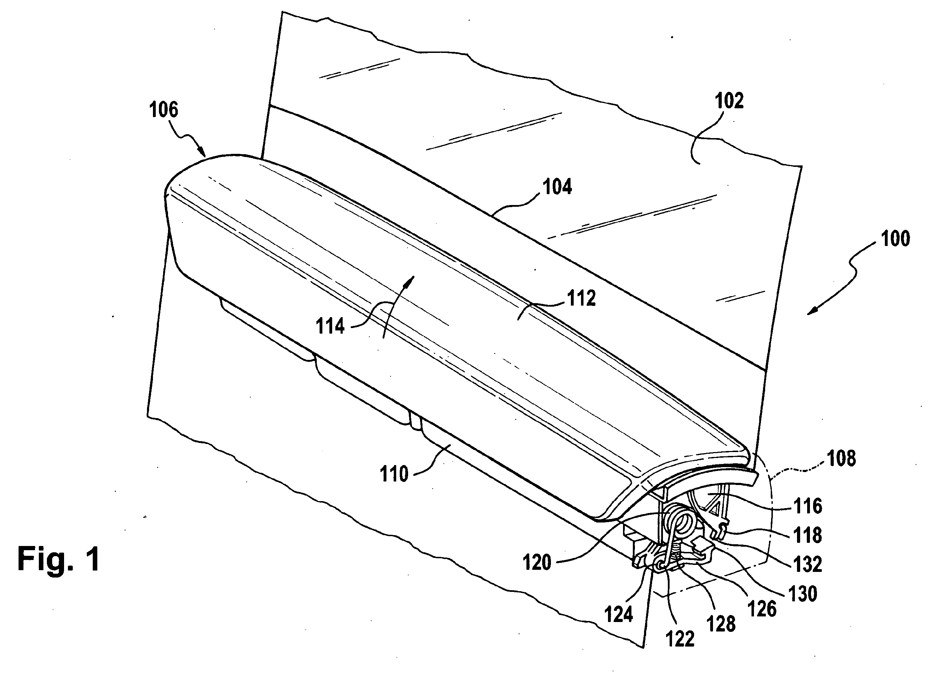

Die Figur 1 zeigt eine Kraftfahrzeugtür 100 mit einem Fenster 102 und einem unterhalb einer Türbrüstung 104 angeordnetem Ablagefach 106. Das Ablagefach 106 ist Teil der Tür-Innenverkleidung der Kraftfahrzeugtür 100. Das Ablagefach 106 ist in Fahrtrichtung durch eine Schalterblende 108 abgeschlossen, die in der Figur 1 mit gestrichelten Linien angedeutet ist. Die Schalterblende 108 dient zur Aufnahme verschiedener Bedienelemente, wie zum Beispiel zur Betätigung des Fensterhebers für das Fenster 102.

Das Ablagefach 106 hat einen Behälter 110, der eine von oben zugängliche Behälteröffnung hat. Die Behälteröffnung des Behälters 110 wird durch einen Behälterdeckel 112 geschlossen. Der Behälterdeckel 112 ist schwenkbar an dem Behälter 110 gelagert und kann durch einen Benutzer in Pfeilrichtung 114 aufgeschwenkt werden, um durch die dann zugängliche Behälteröffnung einen Gegenstand in den durch den Behälter 110 gebildeten Stauraum zu legen oder diesem zu entnehmen.

Der Behälterdeckel 112 hat einen Schwenkhebel 116, der mit dem Behälterdeckel 112 fest verbunden ist. Bei dem Behälterdeckel 112 und dem Schwenkhebel 116 kann es sich um ein einziges Bauteil handeln, wie zum Beispiel ein Formteil aus einem Kunststoff.

An dem Schwenkhebel 116 greift ein Ende 118 einer Totpunktfeder 120 an, die mit ihrem anderen Ende 122 mit dem Behälter 110 verbunden ist. Durch die Totpunktfeder 120 wird in der in der Figur 1 gezeigten Position des Behälterdeckels 112 eine Schließkraft bzw. ein Schließmoment auf den Behälterdeckel 112 ausgeübt, welches durch Betätigung des Behälterdeckels 112 in der Pfeilrichtung 114 durch einen Benutzer überwunden werden kann, um den Behälterdeckel 112 zu öffnen.

Nachdem aufgrund der Bewegung des Behälterdeckels 112 ein Totpunkt überschritten worden ist, bewirkt die Totpunktfeder 120 eine Öffnungskraft bzw. ein Offnungsmoment auf den Behälterdeckel 112, um die Öffnungsbewegung zu unterstützen und dann den Behälterdeckel 112 offen zu halten. Dieses Offnungsmoment kann durch den Benutzer durch Betätigung des Behälterdeckels entgegen der Pfeilrichtung 114 überwunden werden, um den Behälterdeckel 112 wieder zu schließen.

Der Behälter 110 hat einen Lagerzapfen 124, der eine in Längsrichtung verlaufende Ausnehmung aufweist, welche das Ende 122 der Totpunktfeder 120 aufnimmt. An dem Lagerzapfen 124 ist eine Sperrklinke 126 schwenkbar gelagert. Die Sperrklinke 126 wird in ihrer in der Figur 1 gezeigten Normalposition durch eine Druckfeder 128 gehalten.

Die Sperrklinke 126 hat an ihrem dem Lagerzapfen 124 abgewandten Ende einen Haken 130, der zum Eingriff in einen entsprechenden am Ende des Schwenkhebels 116 ausgebildeten Haken 132 in einer Verriegelungsposition ausgebildet ist.

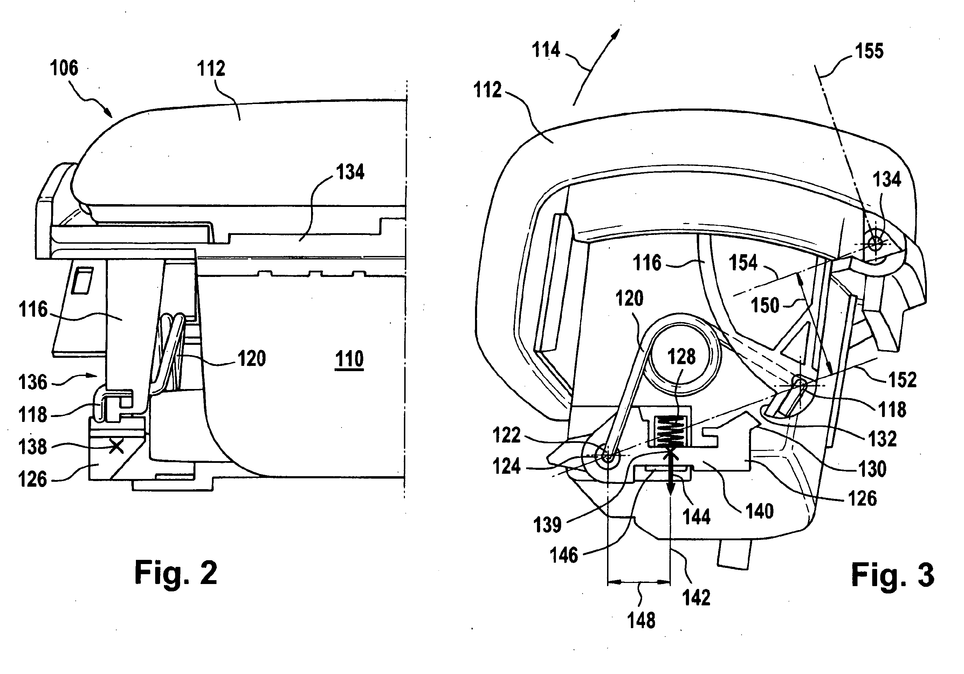

Die Figur 2 zeigt eine Seitenansicht des Ablagefachs 106 der Figur 1 bei geschlossenem Behälterdeckel 112 und in Normalposition der Sperrklinke 126, das heißt beim Normalbetrieb des Kraftfahrzeugs. Die Figur 2 zeigt ein Scharnier 134 mit dem der Behälterdeckel 112 an dem Behälter 110 schwenkbar gelagert ist. Ferner zeigt die Figur 2 ein Durchgangsloch 136 am äußeren Ende des Schwenkhebels 116, durch welches das Ende 118 der Totpunktfeder 120 geführt ist. Das Ende 118 der Totpunktfeder ist abgewinkelt, so dass das Ende 118 nicht aus dem Durchgangsloch 136 entgleiten kann.

Die Figur 2 zeigt ferner die Lage des Schwerpunkts 138 der Sperrklinke 126.

Die Figur 3 zeigt das Ablagefach 106 in einer Frontalansicht. Die Druckfeder 128 ist bei der hier gezeigten Ausführungsform so angeordnet, dass deren Kraftangriffspunkt 139 an dem Schenkel 140 der Sperrklinke 126 in etwa auf der Linie 142 liegt, die in vertikaler Richtung durch den Schwerpunkt 138 verläuft.

Durch die Druckfeder 128 wird eine Federkraft 144 auf den Kraftangriffspunkt 139 ausgeübt, so dass die Sperrklinke 126 gegen einen Anschlag 146 gedrückt wird, der an dem Behälter 110 ausgebildet ist.

Da die Linie 142 von der durch den Lagerzapfen 124 definierten Schwenkachse der Sperrklinke 126 um einen Abstand 148 beabstandet ist, wirkt also auf den Schenkel 140 ein entsprechendes Drehmoment, welches die Sperrklinke 126 in der in der Figur 3 gezeigten Normalposition hält.

Die Totpunktfeder 120, deren Ende 122 in die Ausnehmung des Lagerzapfens 124 gesteckt ist, steht unter einer Vorspannung, so dass die Totpunktfeder 120 eine Schließkraft bzw. ein Schließmoment auf den Behälterdeckel 112 ausübt. Die Größe dieses Schließmoments ergibt sich aus dem Abstand 150 zwischen der die Schwenkachse der Sperrklinke 126 und dem Durchgangsloch 136 verbindenden Linie 152 zu der parallel zu der Linie 152 durch die Schwenkachse des Behälterdeckels 112 verlaufenden Linie 154.

Wenn der Behälterdeckel 112 in die Pfeilrichtung 114 über die gestrichelte Winkelposition 155, das heißt den sogenannten Totpunkt, hinaus bewegt wird, übt die Totpunktfeder 120 statt eines Schließmoments ein Öffnungsmoment auf den Behälterdeckel 112, um die Öffnungsbewegung zu unterstützen bzw. den Behälterdeckel 112 in seiner geöffneten Position zu halten.

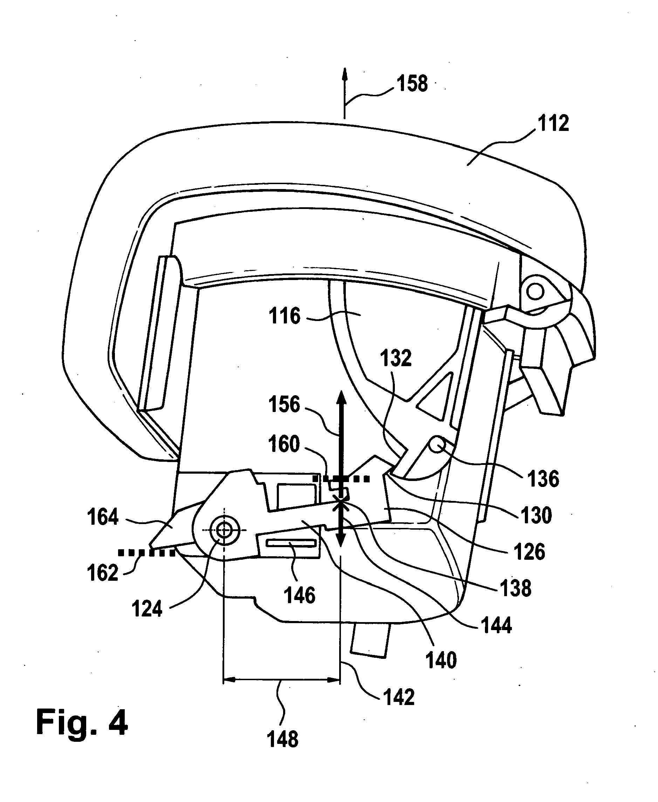

Die Figur 4 zeigt das Ablagefach 106 in einer Verriegelungsposition der Sperrklinke 126, die diese aufgrund eines Aufpralls eingenommen hat. Der Übersichtlichkeit halber sind die Totpunktfeder 120 und die Druckfeder 128 in der Figur 4 nicht dargestellt.

Wenn es beispielsweise bei einem Unfall zu einem Überschlag des Kraftfahrzeugs kommt und das Kraftfahrzeug mit seinem Dach nach unten auf die Straße aufschlägt, so wirkt eine Beschleunigungskraft 156 auf den Schwerpunkt 138 der Sperrklinke 126, die der Federkraft 144 entgegen gerichtet ist. Eine entsprechende Beschleunigungskraft 158 wirkt auch auf den Behälterdeckel 112.

Die Federkraft 144 und die Masse der Sperrklinke 126 sind dabei so gewählt, dass das durch die Federkraft 144 bewirkte Haltemoment, welches die Sperrklinke 126 in ihrer Normalposition hält, bereits bei einer geringeren Beschleunigung überwunden wird als dies für das von der Totpunktfeder 120 auf den Behälterdeckel 112 ausgeübte Schließmoment der Fall ist. Dadurch eilt das durch die Sperrklinke 126 und die Druckfeder 128 (in der Figur 4 der Übersichtlichkeit halber nicht dargestellt) gebildete Masse-Feder-System dem durch die Totpunktfeder 120 und den Behälterdeckel 112 gebildete Masse-Feder-System vor, wodurch die Sperrklinke 126 ihre in der Figur 4 gezeigte Verriegelungsposition erreicht, solange sich der Behälterdeckel 112 nicht oder nur unwesentlich geöffnet hat.

In der Verriegelungsposition greifen die Haken 130 und 132 ineinander ein, so dass der Behälterdeckel 112 durch die Sperrklinke 126 arretiert wird.

Die Schwenkbewegung der Sperrklinke 126 in ihre Verriegelungsposition wird dabei entweder durch die ineinander greifenden Haken 130 und 132 begrenzt und / oder durch einen an der Wandung des Behälters 110 gebildeten Anschlag 160 und / oder durch einen Anschlag 162, den ein Umgebungsteil der Kraftfahrzeugtür-Innenverkleidung mit einer Nase 164 der Sperrklinke 126 bilden kann.

Aufgrund der Voreilung des Feder-Masse-Systems, welches aus der Sperrklinke 126 und der Druckfeder 138 gebildet wird, wird der Behälterdeckel 112, sobald er sich in Bewegung setzt, arretiert, und dabei praktisch nicht oder nur wenig geöffnet, so dass keine oder jedenfalls keine größere Gegenstände aus dem Behälter herausfallen können, wenn das Fahrzeug mit dem Dach nach unten auf der Straße aufschlägt. Beispielsweise wird der Behälterdeckel 112 um höchstens 10° geöffnet, beispielsweise um ca. 7°, 3,75° oder 1,5°, je nach den gewählten Federkräften und Masseverhältnissen sowie der Geometrie der Haken 130, 132 sowie gegebenenfalls der Anschläge 160, 162. Wenn die Druckfeder 128 eine kleine Federkonstante hat und die Federkraft 144 entsprechend gering ist, ist eine Ausbildung des Ablagefachs 106 so möglich, bei der der Behälterdeckel 112 in der Verriegelungsposition nicht oder fast nicht geöffnet ist.

Nach dem Abbau der Beschleunigungskräfte 156 und 158, das heißt nach dem beendeten Aufprallvorgang, wird aufgrund des von der Totpunktfeder 120 ausgeübten Schließmoments der Behälterdeckel 112 wieder vollständig geschlossen. Vorzugsweise fahren dabei die Haken 130, 132 auseinander, so dass die Sperrklinke 126 in ihre Normposition zurück schwenkt. Dadurch ist es möglich, den Behälterdeckel 112 auch nach einem solchen Aufprall zerstörungsfrei zu öffnen.

Beispielsweise ist das durch die Sperrklinke 126 und die Druckfeder 128 gebildete Feder-Masse-System so dimensioniert, dass bei einer Beschleunigung in Richtung der Beschleunigungskraft 156 von 1 g bis 3 g das von der Druckfeder 128 bewirkte Haltemoment überwunden wird. Dagegen ist das von der Totfeder 120 und dem Behälterdeckel 112 gebildete Masse-Feder-System so dimensioniert, dass das von der Totpunktfeder 120 bewirkte Schließmoment erst bei einer höheren Beschleunigung von zum Beispiel zwischen 3 g und 5 g überwunden wird. Vorzugsweise beträgt die Differenz zwischen diesen Beschleunigungen zumindest 1 g, vorzugsweise ca. 2,3 g.

Dies kann beispielsweise erreicht werden bei einer Masse der Sperrklinke 126 von ca. 15 g und einer Federkraft 144 der Druckfeder 128 von 0,3 N, wobei der Behälterdeckel 112 beispielsweise eine Masse von ca. 360 g hat und die Totpunktfeder 120 ein Schließmoment von 580 Nmm auf dem Behälterdeckel 112 ausübt. Eine solche Dimensionierung führt dazu, dass bei einer Beschleunigung von 2,3 g das von der Druckfeder 128 verursachte Haltemoment überwunden wird und bei einer Beschleunigung von 4,3 g das von der Totpunktfeder 120 verursachte Schließmoment überwunden wird.

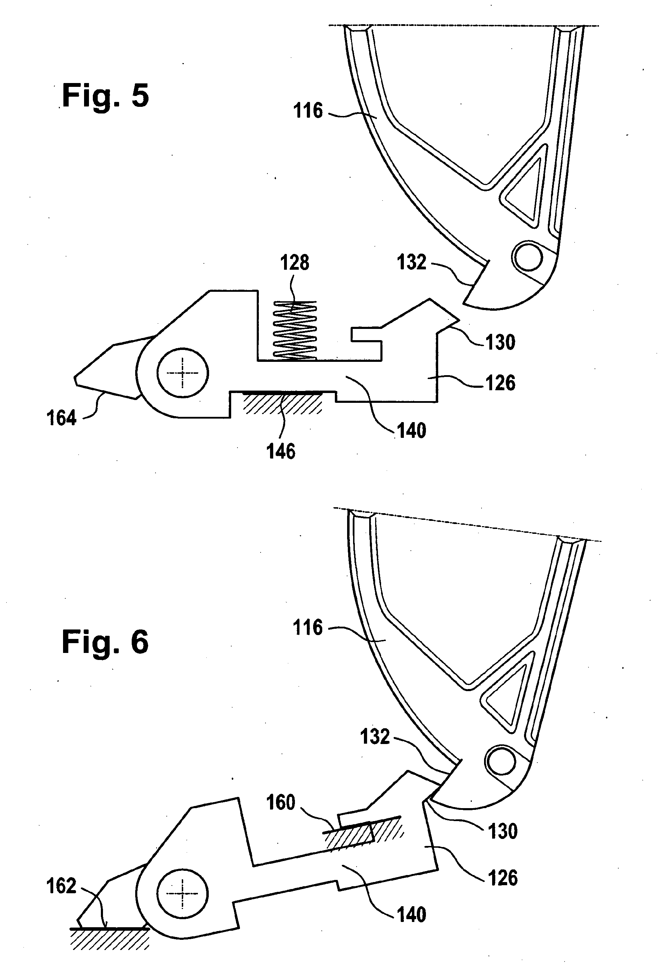

Die Figur 5 zeigt eine Detailansicht der Sperrklinke 126 und des Schwenkhebels 116 der Ausführungsformen der Figur 1 bis 4, und zwar in der Normalposition des Schwenkhebels 116. In der in der Figur 5 gezeigten Position ist der Behälterdeckel 112 geschlossen.

Die Figur 6 zeigt die Sperrklinke 126 in ihrer Verriegelungsposition. Die Verriegelungsposition der Sperrklinke 126 wird durch die Anschläge 160 und / oder 162 festgelegt.

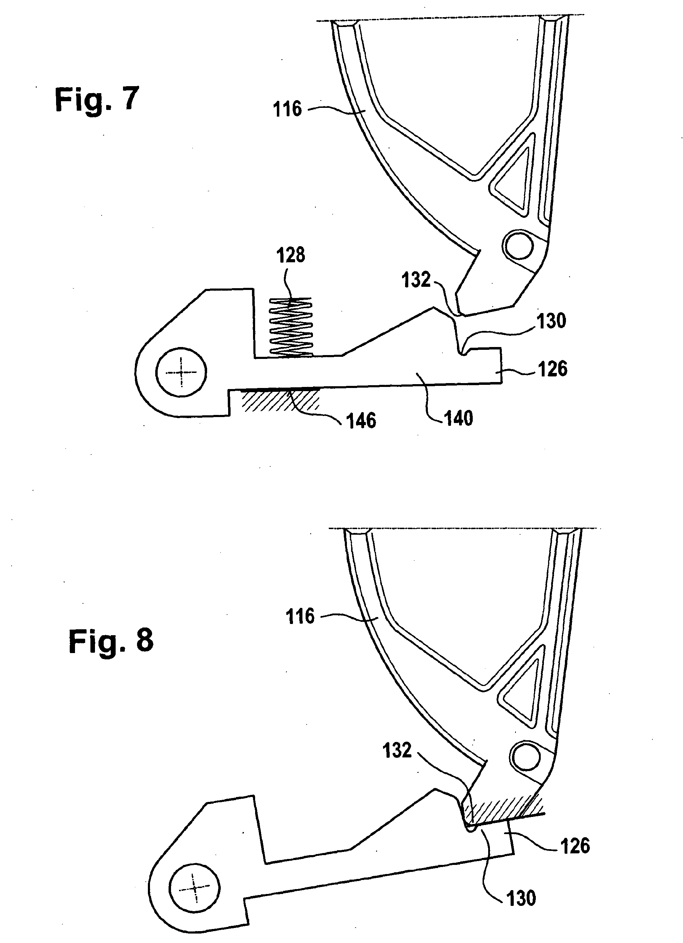

Die Figur 7 zeigt eine alternative Ausführungsform der Sperrklinke 126 sowie des Schwenkhebels 116 in der Normalposition der Sperrklinke 126 bei geschlossenem Behälterdeckel 112. Bei der Ausführungsform der Figur 7 wird die Verriegelungsposition der Sperrklinke 126 durch den zwischen den Haken 130 und 132 gebildeten Anschlag bestimmt, wie in der Figur 8 dargestellt. Ein zusätzlicher Anschlag an dem Behälter 110 oder einem Umgebungsteil wird von der Sperrklinke 126 bei dieser Ausführungsform nicht gebildet.

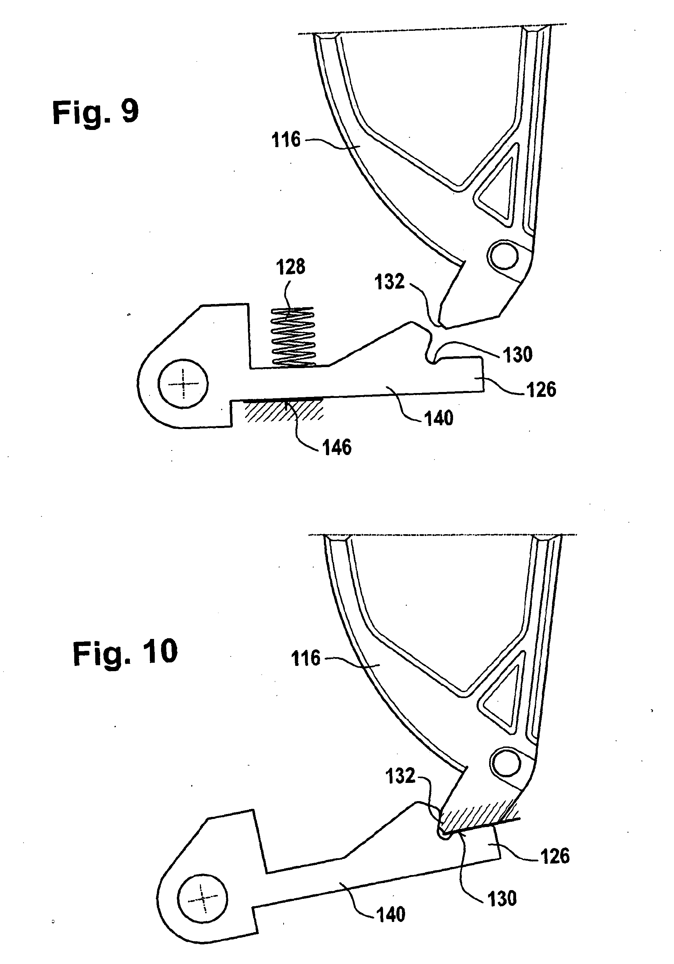

Die Figur 9 zeigt eine alternative Ausführungsform der Haken 130 und 132 der Ausführungsformen der Figuren 7 und 8. Die Haken 130 und 132 sind hier so ausgebildet, dass ein geringerer Öffnungswinkel des Behälterdeckels 112 in der in der Figur 10 gezeigten Verriegelungsposition resultiert.

### Bezugszeichenliste

- 100: Kraftfahrzeugtür
- 102: Fenster
- 104: Türbrüstung
- 106: Ablagefach
- 108: Schalterblende
- 110: Behälter
- 112: Behälterdeckel
- 114: Pfeilrichtung
- 116: Schwenkhebel
- 118: Ende
- 120: Totpunktfeder
- 122: Ende
- 124: Lagerzapfen
- 126: Sperrklinke
- 128: Druckfeder
- 130: Haken
- 132: Haken
- 134: Scharnier
- 136: Durchgangsloch
- 138: Schwerpunkt
- 139: Kraftangriffspunkt
- 140: Schenkel
- 142: Linie
- 144: Federkraft
- 146: Anschlag
- 148: Abstand
- 150: Abstand
- 152: Linie
- 154: Linie
- 155: Winkelposition
- 156: Beschleunigungskraft
- 158: Beschleunigungskraft
- 160: Anschlag
- 162: Anschlag
- 164: Nase

## Patentansprüche

1. Staufach für ein Kraftfahrzeug mit
- einem Behälter (110) und einem an dem Behälter schwenkbar angeordneten Behälterdeckel (112),
- einem an dem Behälterdeckel angeordnetem Schwenkhebel (116),
- einem ersten elastischen Element (120), dessen erstes Ende (122) mit dem Behälter und dessen zweites Ende (118) mit dem Schwenkhebel verbunden ist, so dass das erste elastische Element eine Schließkraft und/oder ein Schließmoment auf den Behälterdeckel ausübt,
- einem Verriegelungselement (126), welches schwenkbar gelagert ist, so dass es aufgrund seiner Massenträgheit bei einem Aufprall des Kraftfahrzeugs in eine Verriegelungsposition zur Arretierung des Schwenkhebels gebracht wird,
**dadurch gekennzeichnet, dass**
das Verriegelungselement um das erste Ende des ersten elastischen Elements schwenkbar gelagert ist, und dass es sich bei dem ersten elastischen Element um eine Totpunktfeder handelt, wobei die Totpunktfeder so ausgebildet ist, dass sie die Schließkraft und/oder das Schließmoment solange ausübt, bis eine Öffnungsstellung des Behälterdeckels einen Totpunkt (155) nicht überschreitet.

2. Staufach nach Anspruch 1, wobei das Verriegelungselement klinkenförmig ausgebildet ist.

3. Staufach nach Anspruch 1 oder 2, wobei an dem Behälter ein Lagerzapfen (124) für das Verriegelungselement angeordnet ist und der Lagerzapfen eine Ausnehmung zur Aufnahme des ersten Endes aufweist.

4. Staufach nach einem der vorhergehenden Ansprüche, wobei die Verriegelungsposition durch einen Anschlag (160, 162) für das Verriegelungselement definiert ist.

5. Staufach nach Anspruch 4, wobei der Anschlag an einer Wandung des Behälters und / oder an einem Umgebungsteil angeordnet ist.

6. Staufach nach einem der vorhergehenden Ansprüche, wobei der Behälterdeckel nach oben schwenkbar ist, so dass eine obere Öffnung des Behälters zugänglich wird.

7. Staufach nach einem der vorhergehenden Ansprüche, mit einem zweiten elastischen Element (128), welches mit dem Verrieglungselement verbunden ist, um das Verriegelungselement beim Normalbetrieb des Kraftfahrzeugs außerhalb der Verriegelungsposition zu halten.

8. Staufach nach Anspruch 7, wobei das zweite elastische Element mit einem Schenkel (140) des Verriegelungselements verbunden ist.

9. Staufach nach Anspruch 7 oder 8, wobei es sich bei dem zweiten elastischen Element um eine Druckfeder (128) handelt.

10. Staufach nach Anspruch 7, 8 oder 9, wobei das aus dem ersten elastischen Element und dem Behälterdeckel gebildete erste Masse-Feder-System so ausgebildet ist, dass der Behälterdeckel bis zu einer ersten Beschleunigung geschlossen bleibt, und wobei das aus dem Verriegelungselement und dem zweiten elastischen Element gebildete zweite Masse-Feder-System so ausgebildet ist, dass das Verriegelungselement bis zu einer zweiten Beschleunigung in seiner Normalposition bleibt, wobei die zweite Beschleunigung kleiner als die erste Beschleunigung ist.

11. Staufach nach Anspruch 10, wobei die erste Beschleunigung zwischen 3 g und 5 g, vorzugsweise ca. 4,3 g beträgt, und die zweite Beschleunigung zwischen 1 g und 3 g, vorzugsweise ca. 2, 3 g beträgt.

12. Staufach nach Anspruch 10 oder 11, wobei die Differenz der ersten und der zweiten Beschleunigungen mindestens 1 g.

13. Staufach nach Anspruch 12, wobei die Differenz der ersten und der zweiten Beschleunigungen mindestens ca. 2,3 g beträgt.

14. Kraftfahrzeug-Innenverkleidungsteil mit einem Staufach nach einem der vorhergehenden Ansprüche 1 bis 13.

15. Kraftfahrzeug-Innenverkleidungsteil nach Anspruch 14, wobei es sich um eine Tür-Innenverkleidung handelt.

16. Kraftfahrzeug-Innenverkleidungsteil nach Anspruch 14, wobei es sich um eine Mittelkonsole handelt.

17. Kraftfahrzeug-Innenverkleidungsteil nach Anspruch 14, wobei es sich um eine Kofferraum-Innenverkleidung handelt.

18. Kraftfahrzeugtür mit einem Staufach nach einem der vorhergehenden An sprüche 1 bis 13.

## Claims

1. Storage compartment for a motor vehicle, having
- a container (110) and a container lid (112) which is pivotably arranged on the container,
- a pivot lever (116) which is arranged on the container lid,
- a first elastic element (120) whose first end (122) is connected to the container and whose second end (118) is connected to the pivot lever, such that the first elastic element exerts a closing force and/or a closing torque on the container lid,
- a locking element (126) which is pivotably mounted such that in the event of a collision of the motor vehicle, said locking element (126), on account of its mass inertia, is placed into a locking position for arresting the pivot lever,
**characterized in that**
the locking element is mounted so as to be pivotable about the first end of the first elastic element, and **in that** the first elastic element is a dead-centre spring, with the dead-centre spring being designed so as to exert the closing force and/or the closing torque for as long as an open position of the container lid does not exceed a dead centre (155).

2. Storage compartment according to Claim 1, with the locking element being formed in the manner of a pawl.

3. Storage compartment according to Claim 1 or 2, with a bearing journal (124) for the locking element being arranged on the container and with the bearing journal having a recess for holding the first end.

4. Storage compartment according to one of the preceding claims, with the locking position being defined by a stop (160, 162) for the locking element.

5. Storage compartment according to Claim 4, with the stop being arranged on a wall of the container and/or on a surrounding part.

6. Storage compartment according to one of the preceding claims, with the container lid being pivotable upwards such that an upper opening of the container is made accessible.

7. Storage compartment according to one of the preceding claims, having a second elastic element (128) which is connected to the locking element in order to hold the locking element outside the locking position during normal operation of the motor vehicle.

8. Storage compartment according to Claim 7, with the second elastic element being connected to a limb (140) of the locking element.

9. Storage compartment according to Claim 7 or 8, with the second elastic element being a pressure spring (128).

10. Storage compartment according to Claim 7, 8 or 9, with the first mass-spring system which is formed by the first elastic element and the container lid being designed such that the container lid remains closed up to a first acceleration, and with the second mass-spring system which is formed by the locking element and the second elastic element being designed such that the locking element remains in its normal position up to a second acceleration, with the second acceleration being lower than the first acceleration.

11. Storage compartment according to Claim 10, with the first acceleration being between 3 g and 5 g, preferably approximately 4.3 g, and the second acceleration being between 1 g and 3 g, preferably approximately 2.3 g.

12. Storage compartment according to Claim 10 or 11, with the difference between the first and second accelerations being at least 1 g.

13. Storage compartment according to Claim 12, with the difference between the first and second accelerations being at least approximately 2.3 g.

14. Motor vehicle interior trim part having a storage compartment according to one of the preceding Claims 1 to 13.

15. Motor vehicle interior trim part according to Claim 14, with said motor vehicle interior trim part being a door interior trim panel.

16. Motor vehicle interior trim part according to Claim 14, with said motor vehicle interior trim part being a central console.

17. Motor vehicle interior trim part according to Claim 14, with said motor vehicle interior trim part being a luggage compartment interior trim panel.

18. Motor vehicle door having a storage compartment according to one of the preceding Claims 1 to 13.

## Revendications

1. Compartiment de rangement pour un véhicule automobile, avec
- un récipient (110) et un couvercle de récipient (112) disposé de manière pivotante sur le récipient,
- un levier de pivotement (116) disposé sur le couvercle de récipient,
- un premier élément élastique (120), dont une première extrémité (122) est reliée au récipient et dont la seconde extrémité (118) est reliée au couvercle pivotant, de telle manière que le premier élément élastique exerce une force de fermeture et/ou un couple de fermeture sur le couvercle de récipient,
- un élément de verrouillage (126), qui est monté de manière pivotante, de telle manière qu'il soit amené dans une position de verrouillage pour bloquer le couvercle pivotant en raison de son inertie en cas de collision du véhicule automobile,
**caractérisé en ce que**
l'élément de verrouillage est monté de manière pivotante autour de la première extrémité du premier élément élastique, et **en ce que** le premier élément élastique est un ressort de point mort, dans lequel le ressort de point mort est conçu de façon à exercer la force de fermeture et/ou le couple de fermeture aussi longtemps qu'une position d'ouverture du couvercle de récipient ne dépasse pas un point mort (155).

2. Compartiment de rangement selon la revendication 1, dans lequel l'élément de verrouillage est réalisé en forme de cliquet.

3. Compartiment de rangement selon la revendication 1 ou 2, dans lequel un tourillon (124) pour l'élément de verrouillage est disposé sur le récipient et le tourillon présente un évidement destiné à recevoir la première extrémité.

4. Compartiment de rangement selon l'une quelconque des revendications précédentes, dans lequel la position de verrouillage est définie par une butée (160, 162) pour l'élément de verrouillage.

5. Compartiment de rangement selon la revendication 4, dans lequel la butée est disposée sur une paroi du récipient et/ou sur une pièce voisine.

6. Compartiment de rangement selon l'une quelconque des revendications précédentes, dans lequel le couvercle de récipient peut pivoter vers le haut, de telle manière qu'une ouverture supérieure du récipient soit accessible.

7. Compartiment de rangement selon l'une quelconque des revendications précédentes, avec un deuxième élément élastique (128), qui est relié à l'élément de verrouillage, afin de maintenir l'élément de verrouillage hors de la position de verrouillage pendant le fonctionnement normal du véhicule automobile.

8. Compartiment de rangement selon la revendication 7, dans lequel le deuxième élément élastique est relié à une branche (140) de l'élément de verrouillage.

9. Compartiment de rangement selon la revendication 7 ou 8, dans lequel le deuxième élément élastique est un ressort de pression (128).

10. Compartiment de rangement selon la revendication 7, 8 ou 9, dans lequel le premier système masse-ressort formé par le premier élément élastique et le couvercle de récipient est réalisé de telle manière que le couvercle de récipient reste fermé jusqu'à une première accélération, et dans lequel le deuxième système masse-ressort formé par l'élément de verrouillage et le deuxième élément élastique est réalisé de telle manière que l'élément de verrouillage reste dans sa position normale jusqu'à une deuxième accélération, la deuxième accélération étant inférieure à la première accélération.

11. Compartiment de rangement selon la revendication 10, dans lequel la première accélération vaut entre 3 g et 5 g, de préférence environ 4, 3 g, et la deuxième accélération vaut entre 1 g et 3 g, de préférence environ 2,3 g.

12. Compartiment de rangement selon la revendication 10 ou 11, dans lequel la différence entre la première et la deuxième accélération vaut au moins 1 g.

13. Compartiment de rangement selon la revendication 12, dans lequel la différence entre la première et la deuxième accélération vaut au moins environ 2,3 g.

14. Pièce d'habillage intérieur de véhicule automobile avec un compartiment de rangement selon l'une quelconque des revendications précédentes 1 à 13.

15. Pièce d'habillage intérieur de véhicule automobile selon la revendication 14, dans laquelle cette pièce est un habillage intérieur de porte.

16. Pièce d'habillage intérieur de véhicule automobile selon la revendication 14, dans laquelle la pièce est une console centrale.

17. Pièce d'habillage intérieur de véhicule automobile selon la revendication 14, dans laquelle la pièce est un habillage intérieur de coffre à bagages.

18. Porte de véhicule automobile avec un compartiment de rangement selon l'une quelconque des revendications précédentes 1 à 13.
